# EUROPEAN PATENT APPLICATION

(11) **EP 1 528 712 A1**
(43) Date of publication of application: **04.05.2005**
(21) Application number: 04300735.0
(22) Date of filing: 26.10.2004
(51) Int. Cl.: H04L 12/24

(54) **Method and apparatus for securing network management communications**

(30) Priority: 30.10.2003 US 695952
(71) Applicant: ALCATEL, 75008 Paris (FR)
(72) Inventor: BENHAMOU, Leon, K2K 3E2, KANATA (CA)
(74) Representative: Feray, Valérie

(57) **Abstract**

A method and system are provided for exchanging legacy network management messages securely. Legacy management messages are embedded as a user-defined object within SNMP messages. The SNMP messages are transmitted to managed nodes using a secure version of SNMP, such as SNMPv3. The managed nodes extract and process the legacy management messages from the SNMP messages. Any legacy response message is embedded within an SNMP message and transmitted back to the management station, which extracts the legacy response for processing. The method and system thereby allow legacy network management systems to be maintained, while adding a feature which permits more secure communication of the legacy management messages.

## Description

### Field of the invention

The invention relates to network management within communication and computing networks, and more particularly to securing network management signals within such networks.

### Background of the invention

Network management of computer or communication networks (referred to collectively as communication networks) requires a management station to communicate with network nodes (such as hosts, routers, and peripherals such as printers). The management station may request information from a node concerning its status, or may instruct the node to change its status. Each node has an agent, implemented as software, to detect network management messages and to process the network management messages. Depending on the type of network management message, processing of the message may involve changing the status of the node, or determining a variable value (for example, number of bits discarded since last response) or status of the node and sending a response message back to the management station indicating the value or status. Each management station has the ability, implemented as software and sometimes referred to as an initiator, to generate network management messages, transmit the network management messages to nodes within the network, and process response messages received in response thereto. Each node may also send unsolicited network management messages to the management station, for example to report state changes of the node (such as hardware failures) or to report status changes implemented by other means (such as through command line interfaces).

Each new piece of equipment added to a network must be able to respond to network management messages received from the management station. A network management protocol is therefore specified or defined by the administrator of the network, and each new piece of equipment added to the network must comply with this protocol. The protocol specifies what types of network management messages the management station will send out, and how each node must process each type of network management message.

Many corporations have developed their own proprietary network management protocols at great cost, and many of these legacy protocols are still employed. However, many of these legacy protocols were developed before network security concerns were raised. Since a node may change its status, or even reboot or reinitialize, in response to a network management message, it is important that the nodes in a network be confident that a network management message originated from a legitimate management station.

One option available to the owner of a network which uses an unsecured network management protocol who wishes to implement a secure network management protocol is to implement packet authentication or encryption, or more commonly both, within the legacy protocol. However, this requires the development of an entire authentication and encryption system. Another option is installation of IPSec, an off-the-shelf solution, if the legacy network management messages are carried over an Internet Protocol link. However, IPSec is a large system requiring much implementation and testing to install.

Yet another option is to replace the legacy protocol with Simple Network Management Protocol version 3 (SNMPv3) (Case et al., "Message Processing and Dispatching for the Simple Network Management Protocol (SNMP)", IETF RFC 2262, January 1998). However, this is also an expensive solution as it requires the legacy system, including the management message processing software on each network element to be discarded and replaced. The legacy agents at each node must be replaced with an SNMP agent, the agent at each node requiring custom configuration.

### Summary of the invention

In accordance with one aspect of the invention, a method is provided for providing secure network management communications within a communication network, the communication network including network elements each adapted to generate and process legacy network management messages in conformance with a legacy management system. A first legacy network management message is embedded within a first Simple Network Management Protocol (SNMP) message at a first network element. The first SNMP message is transmitted over the network to a second network element. The first legacy network management message is then extracted from the first SNMP message at the second network element. The first legacy network management message may be generated at the first network element, and the first legacy network management message may be processed at the second network element.

In one embodiment, a second legacy network management message may be generated at the second network element in response to the first legacy network management message. The second legacy network management message is embedded within a second SNMP message at the second network element. The second SNMP message is transmitted over the network to the first network element. The second legacy network management message is extracted from the second SNMP message at the first network element.

In accordance with another aspect of the invention, a network management system within a communication network is provided. A management station includes a legacy interface for generating a first legacy network management message in conformance with a legacy network management protocol. The management station also includes a Simple Network Management Protocol (SNMP) initiator for embedding the first legacy network management message within a first SNMP message and for transmitting the first SNMP message to a node. The node includes an SNMP agent for receiving the first SNMP message and for extracting the first legacy network management message from the first SNMP message. The node also includes a legacy agent for processing the legacy network management message in conformance with the legacy network management protocol.

The method and apparatus of the present invention allow legacy network management messages to be transmitted with improved security, without requiring replacement of an entire legacy system. Using simple SNMP initiators and simple SNMP agents, legacy network management messages are embedded within SNMP messages, and exchanged between network elements using a secure version of SNMP. Legacy software (in the form of agents and interfaces) is then able to process the legacy management messages.

### Brief description of the drawings

The features and advantages of the invention will become more apparent from the following detailed description of the preferred embodiment(s) with reference to the attached figure, wherein:

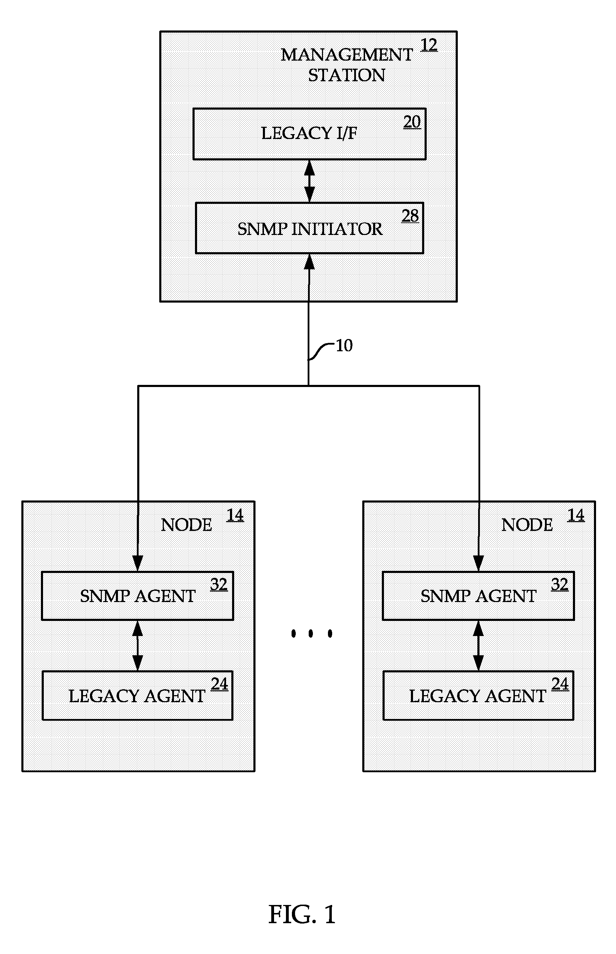

FIG. 1 is a block diagram of a portion of a communication network according to one embodiment of the invention.
It will be noted that in the attached figures, like features bear similar labels.

### Detailed description of the embodiments

Referring to FIG. 1, a block diagram of a portion of a communication network 10 is shown. The network 10 includes a management station 12 and a plurality of nodes 14. The management station 12 is responsible for administering the nodes 14. The management station 12 exchanges network management messages with each node 14 by transmitting and receiving network management messages over the network 10. Collectively, the management station 12 and the nodes 14 are referred to as network elements. The network depicted in FIG. 1 includes one management station and a plurality of nodes. More generally the network 10 includes at least one management station and at least one node, connected in any configuration.

The management station 12 and the nodes 14 are designed to implement a legacy network management system. The legacy network management system may be any network management system capable of exchanging legacy network management messages between network elements in accordance with a legacy management protocol. The management station 12 includes a legacy management interface 20. Each node 14 includes a legacy agent 24. The legacy management interface generates legacy network management messages, to which each legacy agent 24 has the ability to respond. Each legacy agent 24 may respond to particular legacy network management messages by generating another legacy network management message, which the legacy management interface has the ability to process. Each legacy agent 24 may also generate unsolicited legacy network management messages in order to, for example, report state changes or status changes.

The management station 12 and the nodes 14 exchange legacy network management messages using a secure version of Simple Network Management Protocol (SNMP), such as SNMPv3. The legacy network management messages are embedded within SNMP messages as user-defined SNMP objects. The management station 12 includes an SNMP initiator 28. The SNMP initiator 28 receives a legacy network management message generated by the legacy interface 20, and embeds the legacy network management message within an SNMP message. The SNMP initiator 28 then transmits the SNMP message to one or more of the nodes 14.

Each node 14 includes an SNMP agent 32. The SNMP agent 32 receives an SNMP message from the SNMP initiator 28. The SNMP message includes as a user-defined object a legacy network management message generated by the legacy management interface 20 and embedded within the SNMP message by the SNMP initiator 28. The SNMP agent 32 extracts the legacy network management message from the SNMP message and passes it to the legacy agent 24 within the node 14. The legacy agent 24 processes the legacy network management message in accordance with the legacy management protocol. If the legacy agent 24 prepares a second legacy network management message in response to the legacy network management message generated by the legacy interface 20, the legacy agent 24 passes the second legacy network management message to the SNMP agent 32. The SNMP agent 32 embeds the second legacy network management message as a user-defined object within an SNMP message, and sends the SNMP message to the SNMP initiator 28. Similarly, if the legacy agent 24 generates an unsolicited legacy network management message, the legacy agent 24 passes the legacy network management message to the SNMP agent 32. The SNMP agent 32 embeds the legacy network management message as a user-defined object within an SNMP message, and sends the SNMP message to the SNMP initiator 28.

When the SNMP initiator 28 receives an SNMP message from an SNMP agent 32, the SNMP initiator 28 extracts the legacy network management message from the SNMP message and passes the legacy network management message to the legacy interface 20. The legacy interface 20 then processes the legacy network management message in accordance with the legacy management protocol.

It should be noted that the SNMP initiator 28 and the SNMP agents 32 may be very simple. Their responsibility is to embed legacy network management messages within SNMP messages, to exchange SNMP messages in conformance with a secure SNMP transmission protocol, and to extract legacy network management messages from received SNMP messages and forward the legacy network management message to a legacy agent or legacy management interface.

As described above, the SNMP initiator and each SNMP agent include instructions for interfacing legacy network management messages with SNMP. In the preferred embodiment, the instructions are in the form of software running on a processor, but may more generally be in the form of any combination of software or hardware within a processor, including hardware within an integrated circuit. The processor need not be a single device, but rather the instructions could be located in more than one device. If in the form of software, the instructions may be stored on a software-readable medium.

The invention has been described as embedding legacy network management messages, compliant with a legacy network management system, within a secure version of SNMP. The advantages of the invention are therefore best realized when the legacy network management system provides less security than the secure version of SNMP. The legacy network management system could lack any of a number of security features present in the secure version of SNMP, such as encryption, authentication, authorization, or time stamping, or any combination of such features. The legacy network management system could also provide such features but with a lessor degree of security than that provided by the secure version of SNMP, such as lower bit encryption than that implemented by the secure version of SNMP. Generally, the secure version of SNMP is one that provides improved security when exchanging network management messages than does the legacy network management system. The invention could be implemented with a version of SNMP that does not provide improved security over the legacy network management system, but there would be little advantage in such an implementation.

The embodiments presented are exemplary only and persons skilled in the art would appreciate that variations to the above described embodiments may be made without departing from the spirit of the invention. The scope of the invention is solely defined by the appended claims.

## Claims

1. A method of providing secure network management communications within a communication network, the communication network including a plurality of network elements each adapted to generate and process legacy network management messages in conformance with a legacy management system, the method comprising the steps of:
embedding a first legacy network management message within a first Simple Network Management Protocol (SNMP) message at a first network element;
transmitting the first SNMP message over the network to a second network element; and
extracting the first legacy network management message from the first SNMP message at the second network element.

2. The method of claim 1 wherein the step of transmitting the first SNMP message comprises transmitting the first SNMP message in conformance with a secure version of SNMP.

3. The method of claim 2 wherein the step of transmitting the first SNMP message comprises transmitting the first SNMP message in conformance with SNMP version 3 (SNMPv3).

4. The method of claim 1 wherein the legacy management system provides less security than SNMP.

5. The method of claim 1 comprising the further steps of:
generating the first legacy network management message at the first network element; and
processing the first legacy network management message at the second network element.

6. The method of claim 5 comprising the further steps of:
generating a second legacy network management message at the second network element in response to the first legacy network management message;
embedding the second legacy network management message within a second SNMP message at the second network element;
transmitting the second SNMP message over the network to the first network element; and
extracting the second legacy network management message from the second SNMP message at the first network element.

7. The method of claim 1 wherein the first network element is a management station, and wherein the second network element is a node.

8. The method of claim 1 wherein the first network element is a node, and wherein the second network element is a management station.

9. A network management system within a communication network, the communication network including a management station and a node, comprising:
a legacy interface at the management station for generating a first legacy network management message in conformance with a legacy network management protocol;
a Simple Network Management Protocol (SNMP) initiator at the management station for embedding the first legacy network management message within a first SNMP message and for transmitting the first SNMP message to the node;
an SNMP agent at the node for receiving the first SNMP message and for extracting the first legacy network management message from the first SNMP message; and
a legacy agent at the node for processing the legacy network management message in conformance with the legacy network management protocol.

10. The system of claim 9 wherein the SNMP initiator is adapted to transmit the first SNMP message in conformance with a secure version of SNMP.

11. The system of claim 10 wherein the SNMP initiator is adapted to transmit the first SNMP message in conformance with SNMP version 3 (SNMPv3).

12. The system of claim 9 wherein the legacy network management protocol provides less security than SNMP.

13. A Simple Network Management Protocol (SNMP) initiator at a management station within a communication network, comprising:
instructions for receiving a legacy network management message which conforms to a legacy network management protocol;
instructions for embedding the legacy network management message within an SNMP message; and
instructions for transmitting the SNMP message to a node within the communication network.

14. The SNMP initiator of claim 13 wherein the legacy network management protocol provides less security than SNMP.

15. A Simple Network Management Protocol (SNMP) agent at a node within a communication network, comprising:
instructions for receiving a first SNMP message from a management station within a communication network;
instructions for extracting a first legacy network management message from the first SNMP message, the first legacy network management message conforming to a legacy network management protocol; and
instructions for sending the first legacy network management message to a legacy agent at the node.

16. The SNMP agent of claim 15 wherein the legacy network management protocol provides less security than SNMP.

17. The SNMP agent of claim 15 further comprising:
instructions for receiving a second legacy network management message from the legacy agent;
instructions for embedding the second legacy network management message within a second SNMP message; and
instructions for transmitting the second SNMP message to the management station.

18. The SNMP agent of claim 17 wherein the legacy network management protocol provides less security than SNMP.
